## Europäisches Patentamt

## European Patent Office

## Office européen des brevets

(11) Veröffentlichungsnummer: **0 183 747**

**B1**

(12) **EUROPÄISCHE PATENTSCHRIFT**

(45) Veröffentlichungstag der Patentschrift:
13.01.88

(21) Anmeldenummer: **85902532.2**

(22) Anmeldetag: **20.05.85**

(86) Internationale Anmeldenummer:
**PCT/EP 85/00238**

(87) Internationale Veröffentlichungsnummer:
**WO 85/05663 (19.12.85 Gazette 85/27)**

(51) Int. Cl.⁴: **F 16 F 15/12**, F 16 D 3/58

(54) **DREHSCHWINGUNGSTILGER.**

(30) Priorität: **01.06.84 DE 3420570**

(43) Veröffentlichungstag der Anmeldung:
**11.06.86 Patentblatt 86/24**

(45) Bekanntmachung des Hinweises auf die Patenterteilung:
**13.01.88 Patentblatt 88/2**

(84) Benannte Vertragsstaaten:
**AT DE FR GB IT SE**

(56) Entgegenhaltungen:
**DE-A-1 575 752**
**DE-C-3 134 310**
**GB-A-349 353**
**GB-A-557 133**
**GB-A-664 119**
**US-A-1 892 793**
**US-A-1 916 309**
**US-A-2 548 839**
**US-A-3 477 311**
**US-A-4 252 227**

(73) Patentinhaber: **SGF SÜDDEUTSCHE GELENKSCHEIBENFABRIK GMBH & CO. KG., Graslitzer Strasse 14, D-8264 Waldkraiburg (DE)**

(72) Erfinder: **WÄHLING, Werner, Sigibertstrasse 19, D-8261 Kraiburg/Inn (DE)**
Erfinder: **ZIEGLER, Günther, Warnsdorfer Strasse 15, D-8264 Waldkraiburg (DE)**

(74) Vertreter: **Wuesthoff, Franz, Dr.- Ing., Patentanwälte Wuesthoff -v. Pechmann-Behrens- Goetz Schweigerstrasse 2, D-8000 München 90 (DE)**

## Beschreibung

Die Erfindung betrifft Drehschwingungstilger, insbesondere für Kraftfahrzeuge, mit
- einem Träger, der Befestigungsstellen zur Anbringung an einem Wellenflansch od.dgl. aufweist,
- einer Schwungmasse, die gleichachsig mit dem Träger in radialem Abstand von diesem angeordnet ist,
- mehreren Federelementen aus gummielastischem Werkstoff, die in Umfangsabständen zwischen Träger und Schwungmasse angeordnet sind und beide miteinander verbinden,
- abwälzbaren Versteifungselementen, die achsparallel zu Träger und Schwungmasse mit radialer Vorspannung innerhalb der Federelemente angeordnet sind, und
- elastischen Wälzbahnen, die innerhalb eines Hohlraums je eines Federelements ausgebildet und dem Träger zugeordnet sind, in ihrem mittleren Bereich nur einen geringen Abstand von je einem Kragenstück des Trägers haben und an denen je eines der Versteifungselemente abwälzbar ist.

Bei einem bekannten Drehschwingungstilger dieser Gattung (DE-C-3 134 310, Fig. 3) ist der Träger ein Stanzteil aus Blech in Form eines abgerundeten gleichseitigen Dreiecks, dessen Ecken als Befestigungsstellen mit je einem Durchgangsloch für eine Schraube ausgebildet sind. Als Schwungmasse ist ein kreisförmiger Ring vorgesehen, der den Träger mit verhältnismäßig kleinem radialen Abstand von dessen abgerundeten Ecken umschließt. Der Zwischenraum zwischen Träger und Schwungmasse ist im wesentlichen mit Gummi ausgefüllt. Der Gummi ist durch Schlitze im Bereich der abgerundeten Ecken des Trägers in einzelne Federelemente unterteilt, deren Torsionssteifigkeit durch je eine an den mittleren Bereich der Längsseiten des Trägers angrenzende achsparallele Aussparung von elliptischem Querschnitt vermindert ist. In jede dieser Aussparungen ist ein hülsenförmiges Versteifungselement eingepreßt, das radial innen an einer am Träger ausgebildeten elastischen Wälzbahn abwälzbar ist und radial nach außen an einer verhältnismäßig dicken, schwungmassenseitigen Brücke aus dem Gummi abgestützt ist, in die das Versteifungselement mindestens mit einem Teil seiner Umfangsfläche eingebettet ist. Auf diese Weise soll ein zum Dämpfen von Biege- und Torsionsschwingungen geeigneter Schwingungstilger geschaffen werden, der ein Verhältnis von etwa 2,5 : 1 seiner Biegeschwingungs- zu seiner Torsionsschwingungs-Eigenfreguenz aufweist. Dabei sollen die Versteifungselemente, die Biegeschwingungs-Eigenfreguenz erhöhen, die Torsionsschwingungs-Eigenfrequenz jedoch nicht beeinflussen.

Bei der Herstellung dieses bekannten Schwingungstilgers ist es schwierig, eine vorgegebene Torsions-Eigenfrequenz hinreichend genau einzuhalten. Hersteller von Kraftfahrzeugen, in die Drehschwingungstilger eingebaut werden, schreiben beispielsweise eine Torsions-Eigenfrequenz von 60 Hz mit einer Toleranzbreite von nur ± 4 Hz vor. Die Torsions-Eigenfrequenz eines gattungsgemäßen Drehschwingungstilgers hängt u.a. von der Beschaffenheit der Federelemente ab; diese bestehen üblicherweise aus Gummi, dessen Härte Schwankungen unterliegt, mit denen die genannte Toleranzbreite der Torsions-Eigenfrequenz nur sehr schwer einzuhalten ist.

Der Erfindung liegt deshalb die Aufgabe zugrunde, einen Drehschwingungstilger der eingangs beschriebenen Gattung derart weiterzubilden, daß eine vorgegebene Torsions-Eigenfrequenz in engeren als bisher eingehalten und die Tendenz zu Radial- und Taumelschwingungen so gut wie vollständig beseitigt werden kann.

Die Aufgabe ist erfindungsgemäß dadurch gelöst, daß
- die Versteifungselemente starre Wälzkörper sind,
- die Kragenstücke Teile eines Zylinders sind, dessen Achse die Drehachse des Trägers ist,
- jeder dem Träger zugeordneten Wälzbahn eine der Schwungmasse zugeordnete Wälzbahn radial gegenüberliegt,
- die in ihrem mittleren Bereich nur einen geringen Abstand von der Schwungmasse hat,
- und an welcher der zugehörige Wälzkörper ebenfalls abwälzbar ist,
- wobei die zusammengehörigen Wälzbahnen in Umfangsrichtung beiderseits des zugehörigen Wälzkörpers konvergieren.

Jeder Auslenkung der Schwungmasse aus ihrer Mittelstellung gegenüber dem Träger in Umfangsrichtung wirkt erfindungsgemäß eine zunehmende Rückstellkraft der Wälzkörper entgegen. Daraus ergeben sich Rückstellmomente, die zu den Rückstellmomenten der Federelemente hinzukommen.

Durch die Erfindung ergeben sich auch Einflußmöglichkeiten auf die Eigenfrequenz eines Drehschwingungstilgers, die zusätzlich zu den bisherigen Einflußgrößen von Gestaltung und Bemessung der Wälzbahnen sowie der Wälzkörper abhängt. Erweist sich beispielsweise die Eigenfrequenz eines fertigen Drehschwingungstilgers als zu klein, so kann sie dadurch erhöht werden, daß man Wälzkörper einsetzt, deren Durchmesser etwas größer ist als ursprünglich vorgesehen. Die starren Wälzkörper haben außerdem in Verbindung mit der erfindungsgemäßen Gestaltung der Wälzbahnen an den zylindrischen Kragenstücken des Trägers und an der Schwungmasse den Vorteil, daß sie die Schwungmasse auch dann noch zentrieren, wenn eines oder mehrere der Federelemente als solches unwirksam geworden ist bzw. sind, beispielsweise durch Gummiablösung oder Ermüdungseinriß.

Bei einer vorteilhaften Weiterbildung enden zusammengehörige Wälzbahnen in Umfangsrichtung beiderseits des zugehörigen Wälzkörpers konvergierend in T-förmigen Schlitzen. Dadurch wird die Abwälzbarkeit der Wälzkörper weiter verbessert und deren Einfluß auf die Torsions-Eigenfrequenz des Drehschwingungstilgers noch genauer vorausbestimmbar.

Es ist ferner zweckmäßig, wenn die Wälzkörper diaboloartig mit einer mittleren Einschnürung versehen sind, in die ein am Träger und/oder ein an der Schwungmasse ausgebildeter, in Umfangsrichtung verlaufender Steg eingreift. Dadurch sind die Wälzkörper auf einfache Weise gegen Herausfallen gesichert.

Die im vorstehenden beschriebene Ausgestaltung der Erfindung kann dadurch weitergebildet sein, daß die Stege ebenfalls aus elastischem Werkstoff bestehen. Durch die Gestaltung der Stege läßt sich zusätzlicher Einfluß auf das Rückstellverhalten des Drehschwingungstilgers nehmen.

Ein noch weitergehender Einfluß auf die Charakteristik der Rückstellkräfte und -momente läßt sich dadurch gewinnen, daß die Stege stärker als die Wälzbahnen konvergieren.

In diesem Fall üben die Stege im Bereich der Einschnürungen Rückstellkräfte auf die Wälzkörper schon dann aus, wenn die eigentlichen Wälzbahnen noch keine oder erst geringe Rückstellkräfte auf die beiderseits der Einschnürungen liegenden Bereiche der Wälzkörper ausüben. Die Größe der von den Stegen ausgeübten Rückstellkräfte hängt auch von der Stegbreite ab. Mit Einschnürungen versehene Wälzkörper bieten somit besonders vielfältige Möglichkeiten, das Verhalten eines Drehschwingungstilgers zu beeinflussen.

Ausführungsbeispiele der Erfindung werden im folgenden anhand schematischer Zeichnungen mit weiteren Einzelheiten erläutert. Es zeigt:

Fig. 1 einen erfindungsgemäßen Drehschwingungstilger im Grundriß,

Fig. 2 den Schnitt II-II in Fig. 1

Fig. 3 einen vergrößerten Ausschnitt aus Fig. 1

Fig. 4 den Schnitt IV-IV in Fig. 3,

Fig. 5 einen in eine Gelenkscheibe integrierten erfindungsgemäßen Drehschwingungstilger im Grundriß und

Fig.6 den Schnitt VI-VI in Fig. 5.

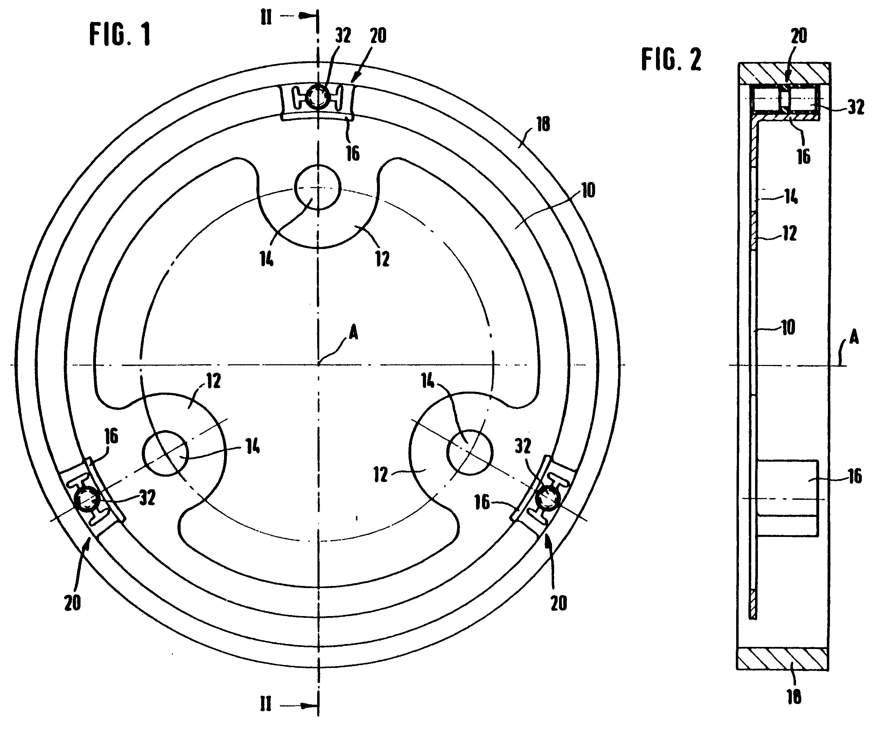

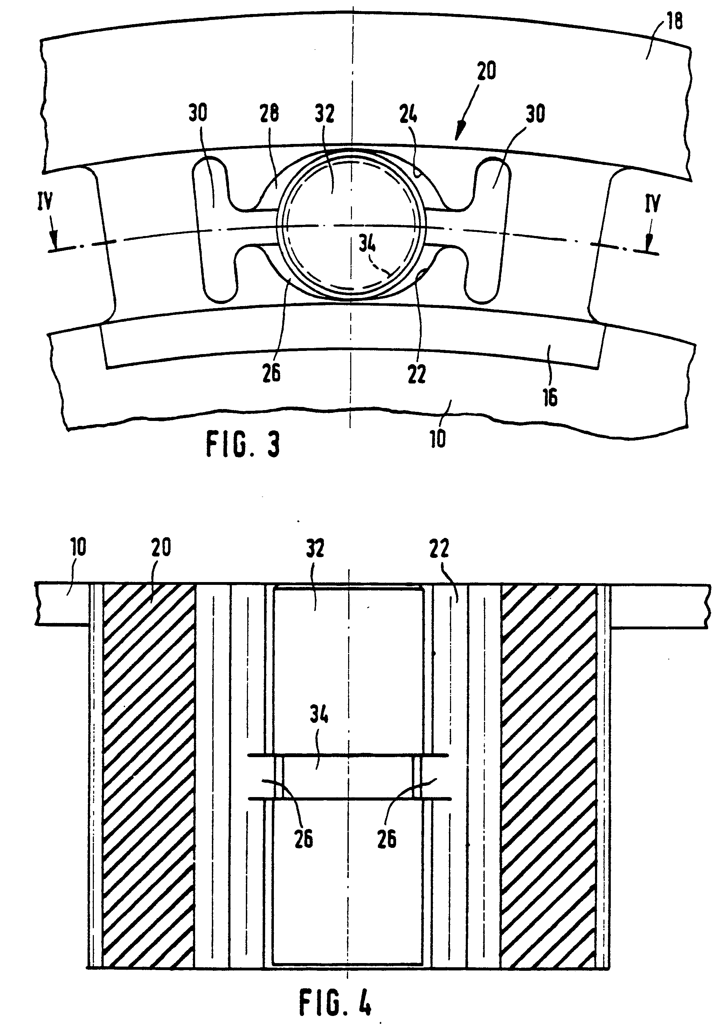

Der in Fig. 1 bis 4 dargestellte Drehschwingungstilger ist einer nicht dargestellten Welle mit der Achse A zugeordnet und hat einen aus Stahlblech gestanzten Träger 10 mit drei Befestigungsstellen 12, die bezüglich der Achse A um je 60° gegeneinander versetzt sind und von je einem radial nach innen ragenden Lappen mit einem Loch 14 für eine Befestigungsschraube gebildet sind. Radial außerhalb jeder Befestigungsstelle 12 ist am Träger 10 durch Abwinkeln des Blechs, aus dem dieser besteht, ein Kragenstück 16 ausgebildet. Die Kragenstücke 16 bilden Teile eines gedachten Zylinders mit der Achse A, der mit radialem Abstand von einer mit dem Träger 10 gleichachsigen, ringförmigen Schwungmasse 18 aus Stahl umschlossen ist.

Der Zwischenraum zwischen jedem der Kragenstücke 16 und der Schwungmasse 18 ist von einem Federelement 20 überbrückt, das Drehschwingungen der Schwungmasse 18 gegenüber dem Träger 10 um die Achse A zuläßt. Die Federelemente 20 bestehen aus Gummi, der an die Außenfläche des zugehörigen Kragenstücks 16 sowie an die Innenfläche der Schwungmasse 18 anvulkanisiert ist und einen achsparallel durchgehenden Hohlraum aufweist. Der Hohlraum ist im mittleren Bereich jedes Federelements 20 durch zwei einander radial gegenüberliegende Wälzbahnen 22 und 24 begrenzt, von denen die erste dem Träger 10 und die zweite der Schwungmasse 18 zugeordnet ist.

Die Wälzbahnen 22 und 24 haben in ihrem mittleren Bereich nur einen geringen radialen Abstand vom zugehörigen Kragenstück 16 bzw. von der Schwungmasse 18 und konvergieren vom mittleren Bereich aus in beiden Umfangsrichtungen; die Wälzbahnen 22 und 24 sind also von einer in Umfangsrichtung nach beiden Seiten hin zunehmend dicker werdenden Schicht des Gummis gebildet, aus dem die Federelemente 20 bestehen. Jede der Wälzbahnen 22 und 24 ist in einer zur Achse A normalen Ebene durch einen Steg 26 bzw. 28 unterteilt. Die Wälzbahnen 22 und 24 sowie die Stege 26 und 28 innerhalb jedes Federelements 20 erstrecken sich zwischen zwei T-förmigen Schlitzen 30.

Zwischen den beiden Wälzbahnen 22 und 24 in jedem Federelement 20 ist ein starrer Wälzkörper 32 mit radialer Vorspannung gelagert. Jeder der Wälzkörper 32 hat die Form einer im wesentlichen zylindrischen, zur Achse A parallelen Rolle mit einer mittleren Einschnürung 34, in welche die beiden zugehörigen Stege 26 und 28 beim axialen Einbau des Wälzkörpers elastisch eingerastet sind. Sämtliche Wälzkörper 32 bestehen aus Metall oder einem Polyamid hoher Festigkeit oder einem ähnlich starren Werkstoff oder Verbundwerkstoff.

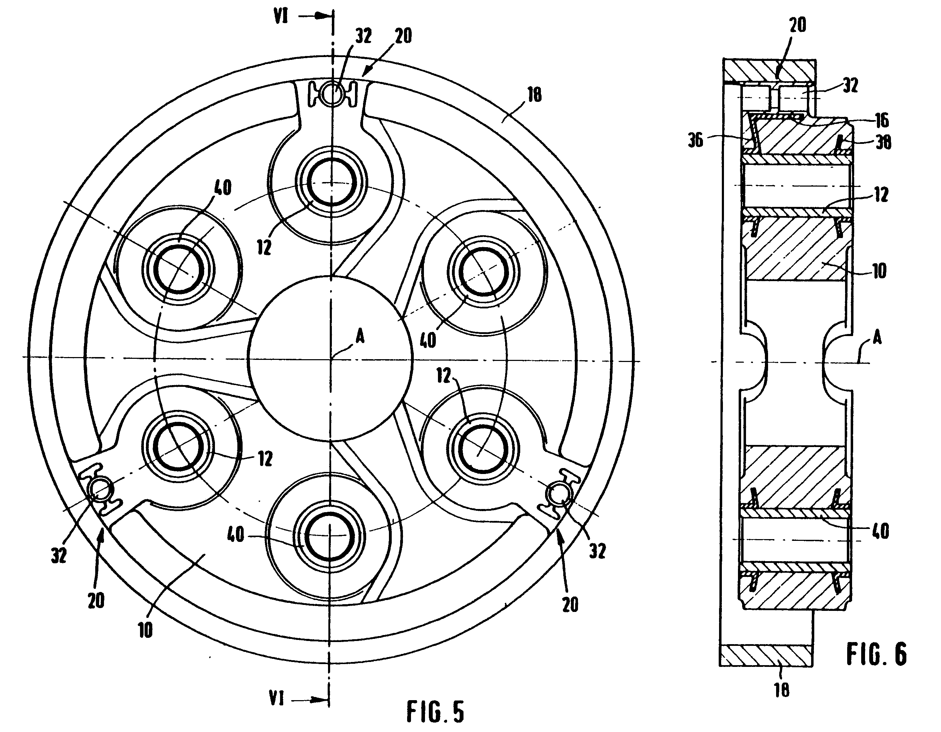

Bei dem in Fig. 5 und 6 dargestellten, mit einer Gelenkscheibe integrierten Drehschwingungstilger bildet die im wesentlichen aus Gummi bestehende Gelenkscheibe den Träger 10. In diesen Träger 10 sind, um je 60° gegeneinander versetzt, drei Befestigungsstellen 12 in Gestalt je einer zylindrischen Büchse eingebettet. Jeder dieser Büchsen ist ein Kragenstück 16 zugeordnet, das an einem auf die betreffende Büchse aufgezogenen und mit ihr verschweißten Flansch 36 ausgebildet ist. Am vom Flansch 36 abgewandten Ende jeder als Befestigungsstelle 12 dienenden Büchse ist ein weiterer Flansch 38 befestigt.

Die drei Befestigungsstellen 12 in Fig. 5 und 6 sind, ebenso wie bei der in Fig.1 bis 4 dargestellten Ausführungsform, zur Befestigung des Trägers 10 an einer nicht dargestellten Welle vorgesehen. Zur Befestigung an einer zweiten Welle sind gemäß Fig. 5 und 6 in den Träger 10 drei weitere Büchsen 40 eingebettet, die auf je einer Winkelhalbierenden zwischen zwei benachbarten Befestigungsstellen 12 angeordnet sind und den gleichen Abstand wie diese von der Achse A haben.

Der Drehschwingungstilger gemäß Fig. 5 und 6 entspricht im übrigen, also abgesehen von seiner Integration mit einer Gelenkscheibe, dem in Fig. 1 bis 5 dargestellten Drehschwingungstilger.


## Patentansprüche

1. Drehschwingungstilger, insbesondere für Kraftfahrzeuge, mit
- einem Träger (10), der Befestigungsstellen (12) zur Anbringung an einem Wellenflansch od.dgl. aufweist,
- einer Schwungmasse (18), die gleichachsig mit dem Träger (10) in radialem Abstand von diesem angeordnet ist,
- mehreren Federelementen (20) aus gummielastischem Werkstoff, die in Umfangsabständen zwischen Träger und Schwungmasse (18) angeordnet sind und beide miteinander verbinden,
- abwälzbaren Versteifungselementen, die achsparallel zu Träger (10) und Schwungmasse (18) mit radialer Vorspannung innerhalb der Federelemente (20) angeordnet sind, und
- elastischen Wälzbahnen (22), die innerhalb eines Hohlraums je eines Federelements (20) ausgebildet und dem Träger (10) zugeordnet sind, in ihrem mittleren Bereich nur einen geringen Abstand von je einem Kragenstück (16) des Trägers (10) haben und an denen je eines der Versteifungselemente (32) abwälzbar ist, dadurch gekennzeichnet, daß
- die Versteifungselemente starre Wälzkörper (32) sind,
- die Kragenstücke (16) Teile eines Zylinders sind, dessen Achse (A) die Drehachse des Trägers (10) ist,
- jeder dem Träger (10) zugeordneten Wälzbahn (22) eine der Schwungmasse (18) zugeordnete elastische Wälzbahn (24) radial gegenüberliegt,
- die in ihrem mittleren Bereich nur einen geringen Abstand von der Schwungmasse (18) hat,
- und an welcher der zugehörige Wälzkörper (32) ebenfalls abwälzbar ist,
- wobei die zusammengehörigen Wälzbahnen in Umfangsrichtung beiderseits des zugehörigen Wälzkörpers konvergieren.

2. Drehschwingungstilger nach Anspruch 1, dadurch gekennzeichnet, daß zusammengehörige Wälzbahnen (22, 24) in Umfangsrichtung beiderseits des zugehörigen Wälzkörpers (32) konvergierend in T-förmigen Schlitzen enden.

3. Drehschwingungstilger nach Anspruch 1 oder 2, dadurch gekennzeichnet, daß die Wälzkörper (32) diaboloartig mit einer mittleren Einschnürung (34) versehen sind, in die ein am Träger (10) und/oder ein an der Schwungmasse (18) ausgebildeter, in Umfangsrichtung verlaufender Steg (26, 28) eingreift.

4. Drehschwingungstilger nach Anspruch 3, dadurch gekennzeichnet, daß die Stege (26, 28) ebenfalls aus elastischem Werkstoff bestehen.

5. Drehschwingungstilger nach Anspruch 4, dadurch gekennzeichnet, daß die Stege (26, 28) stärker als die Wälzbahnen (22, 24) konvergieren.


## Claims

1. A torsional vibration damper, especially for motor vehicles, comprising
- a support (10), provided with fastening spots (12) for connection to a shaft flange and the like,
- a flywheel (18), arranged coaxially with the support (10) and radially spaced from the same,
- several spring elements (20), made of a rubber-elastic material and disposed circumferentially spaced from one another between the support and the flywheel (18) and interconnecting both these two elements,
- rolling stiffening elements, arranged with their axes parallel to those of the support (10) and the flywheel (18), and disposed under radial preload within the spring elements (20), and
- elastic rolling curves (22) which are defined within a cavity of each spring element (20) and are associated with the support (10), each of these curves having its central portion separated only by a small distance from a shroudforming element (16) of the support (10), and on each of which one of the stiffening elements (32) may move in rolling contact,
characterized in that
- the stiffening elements are rigid rolling bodies (32),
- the shroud-forming elements (16) are parts of a cylinder, the axis (A) of which forms the rotational axis of the support (10),
- an elastic rolling curve (24), associated with the flywheel (18), is arranged radially opposite to the rolling curve (22) which is associated with the support (10),
- said rolling curve having its central portion separated only by a small distance from the flywheel (18), and
- and permitting the corresponding rolling body (32) to be moved in rolling contact also on said rolling curve,
- wherein adjacent rolling curves being convergent in the circumferential direction, on both sides of the respective rolling body.

2. The torsional vibration damper according to claim 1, characterized in that adjacent rolling curves (22, 24) are converging in the circumferential direction, on both sides of the respective rolling body (32), to terminate in T-shaped slots.

3. The torsional vibration damper according to claim 1 or 2, characterized in that the rolling bodies (32) are provided in the fashion of diabolo with a central constriction (34), engaged by a web (26, 28) extending in circumferential direction and formed on the support (10) and/or on the flywheel (18).

4. The torsional vibration damper according to claim 3, characterized in that the webs (26, 28) are also made from an elastomeric material.

5. The torsional vibration damper according to claim 4, characterized in that the webs (26, 28) are converging faster than do the rolling curves (22, 24).

**Revendications**

1. Amortisseur des vibrations torsionnelles, plus particulièrement destiné aux véhicules automobiles, ledit amortisseur comprenent
- un support (10), ayant des points de fixation (12) servant au rattachement à la bride d'un arbre ou élément similaire,
- une masse d'inertie (18), alignée axialement avec le support (10), à une distance radiale de ce dernier,
- plusieurs éléments élastiques (20), réalisés en un matériau ayant l'élasticité du caoutchouc, et répartis en direction circonférentielle entre le support (10) et la masse d'inertie, tout en reliant ces deux éléments,
- des éléments raidisseurs roulants, disposés avec leurs axes parallèles aux axes du support (10) et de la masse d'inertie (18), et montés, avec une précontrainte radiale à l'intérieur des éléments élastiques (20), et
- des chemins de roulement élastiques (22), formés dans une cavité de chacun des éléments élastiques (20) et associés au support (10), ces chemins n'étant séparés, dans leur partie centrale, que d'une petite distance d'un élément de collerette (16) du support (10), et chacun desdits chemins permettant à l'un des éléments raidisseurs (32) de rouler sur lui,
caractérisé en ce que
- les éléments raidisseurs sont des corps roulants rigides (32),
- les éléments de collerette (16) sont des parties d'un cylindre dont l'axe (A) est l'axe de rotation du support (10),
- un chemin de roulement élastique (24), associé à la masse d'inertie, est disposé en opposition radiale au chemin de roulement (22) qui est associé au support (10),
- ledit chemin n'étant séparé, dans sa partie centrale, que d'une petite distance de la masse d'inertie (18), et
- permettant au corps roulant (32) correspondant de rouler aussi sur lui,
- les chemins de roulement adjacents convergant en direction circonférentielle, de part et d'autre du corps roulant respectif.

2. Amortisseur des vibrations torsionnelles suivant la revendication 1, caractérisé en ce que des chemins de roulement (22, 24) adjacents convergent en direction circonférentielle, de part et d'autre du corps roulant (32) respectif, tout en se terminant dans des rainures en forme de T.

3. Amortisseur des vibrations torsionnelles suivant la revendication 1 ou 2, caractérisé en ce que le corps roulant (32) présente, à la manière d'un corps biconique "diabolo", une striction centrale (34) dans laquelle s'engage une nervure circonférentielle (26, 28), formée sur le support (10) ou/et sur la masse d'inertie (18).

4. Amortisseur des vibrations torsionnelles suivant la revendication 3, caractérisé en ce que les nervures (26, 28) sont également réalisées en un matériau élastique.

5. Amortisseur des vibrations torsionnelles suivant la revendication 4, caractérisé en ce que la convergence des nervures (26, 28) est plus forte que celle des chemins de roulement (22, 24).

FIG. 1

FIG. 2

0 183 747

FIG. 3

FIG. 4

FIG. 6

FIG.5